Europäisches Patentamt

European Patent Office

Office européen des brevets

(19)

(11) Veröffentlichungsnummer: **0 023 688**
**A1**

## (12) EUROPÄISCHE PATENTANMELDUNG

(21) Anmeldenummer: **80104416.5**

(22) Anmeldetag: **26.07.80**

(51) Int. Cl.³: **A 47 L 15/44,** D 06 F 39/02,
G 01 F 11/08

(30) Priorität: **03.08.79 DE 2931494**

(43) Veröffentlichungstag der Anmeldung: **11.02.81**
**Patentblatt 81/6**

(84) Benannte Vertragsstaaten: **AT BE CH DE FR GB IT LI NL
SE**

(71) Anmelder: **LANG APPARATEBAU GMBH,
Raiffeissenstrasse 7, D-8221 Siegsdorf Obb. (DE)**

(72) Erfinder: **Haslberger, Richard, Wagingerstrasse 18,
D-8221 Hufschlag (DE)**
Erfinder: **Scheurl, Robert, Kienau 4, D-8221 Inzell (DE)**
Erfinder: **Strasser, Hans, Deutsche Alpenstrasse 42,
D-8221 Siegsdorf (DE)**

(74) Vertreter: **Bornemann, Dieter, Dipl.-Ing., c/o Henkel
Kommanditgesellschaft auf Aktien -Patentabteilung-
Postfach 1100 Henkelstrasse 67, D-4000 Düsseldorf (DE)**

(54) **Dosierkombination.**

(57) Die Erfindung betrifft eine Dosierkombination zum
Nachfüllen von Lauge aus einem Vorratsbehälter (10) in
den Tank (3) einer gewerblichen Geschirrspülmaschine.
Das Nachfüllen soll ohne Gefahr für das Personal und
trotzdem ohne Verwendung einer teuren elektrischen Dosierpumpe erfolgen. Die Lösung ist gekennzeichnet durch
eine in eine Leitung (12, 17) zwischen Vorratsbehälter
(10) und Tank (3) eingeschaltete, bei Unterkonzentration
zu betätigende Fußpumpe (1).

Bor/C
0023688

Patentanmeldung
D 5999 EP

"Dosierkombination"

Die Erfindung betrifft eine Dosierkombination zum Nachfüllen von Lauge oder dergleichen aus einem Chemikalienvorratsbehälter in den Tank einer gewerblichen Geschirrspülmaschine mit in den Tank eingeführter Elektrode zum Überwachen der in Einheiten der Konzentration gemessenen Leitfähigkeit der im Tank befindlichen Lösung.

Bei bekannten Einrichtungen dieser Art wird die Konzentration der Lauge oder dergleichen im Tank von gewerblichen Geschirrspülmaschinen durch Leitfähigkeitregler mit Elektrode überwacht, um ein optimales Geschirrspülergebnis zu erreichen. Wenn bei einem solchen Gerät der Leitfähigkeitregler eine Unterdosierung bzw. Unterkonzentration anzeigt, wird eine elektrische Dosierpumpe angesteuert, welche so lange Dosierchemikal in den Tank einbringt, bis die Leitfähigkeit und damit die Konzentration wieder dem voreingestellten Sollwert entspricht und der Regler die elektrische Dosierpumpe wieder abstellt. Da solche elektrischen Pumpen sehr teuer sind, wird in der Praxis häufig darauf verzichtet und jeweils bei Bedarf aus dem Vorratsbehälter Chemikal in den Tank geschüttet. Bei den Chemikalien handelt es sich aber in der Regel um hochkonzentrierte alkalische Lösungen, mit denen ohne besondere Vorsichtsmaßnahmen umzugehen, sehr gefährlich ist.

Der Erfindung liegt die Aufgabe zugrunde, eine Vorrichtung eingangs genannter Art zu schaffen, mit Hilfe derer eine
gefahrlose Chemikalienzugabe in den Geschirrspülmaschinentank möglich ist, ohne auf eine teure elektrische Dosierpumpe zurückgreifen zu müssen. Bei der Dosierkombination
eingangs genannter Art ist die Lösung gekennzeichnet durch
eine in eine Leitung zwischen den Chemikalienvorratsbehälter und den Geschirrspülmaschinentank eingeschaltete, bei
Unterkonzentration zu betätigende Fußpumpe.

Durch die Erfindung wird erreicht, daß mit Hilfe einer Fußpumpe, welche bei Signalisierung einer Unterkonzentration
durch die elektrische Konzentrationsanzeige zu betätigen
ist, ohne Gefahr für das Bedienungspersonal konzentrierte
und daher stark ätzende Lauge aus dem entsprechenden Vorratsbehälter in den Geschirrspülmaschinentank zu pumpen
ist, weil die gesamte Leitung und die Pumpe einen Chemikalienaustritt nicht zulassen.

Gemäß weiterer Erfindung befindet sich der Vorratsbehälter
auf der Konsole der Fußpumpe, auf der die letztere vorzugsweise abnehmbar anzuordnen ist. Ferner ist es günstig, wenn
die Fußpumpe so geschaltet ist, daß die Dosiermenge pro
Hub begrenzt werden kann. Dies ist speziell bei kleinen
Geschirrspülmaschinen mit kleinem Laugentank vorteilhaft,
da man sich dort zweckmäßig mit relativ kleinen Nachdosierhüben an die gewünschte Konzentration heranarbeitet. Zu
große Nachdosierhübe könnten nämlich schon beim ersten Hub
zu einer Überkonzentration führen. Eine vorteilhafte Gestaltung der erfindungsgemäßen Dosierkombination besteht
darin, die Fußpumpe bzw. Dosierpumpe selbst unter eine
Klappe zu setzen, auf die der jeweilige Fußdruck auszuüben
ist. Hierdurch wird die Fußpumpe gegen Schmutz geschützt.

/3

0023688

Die Pumpe selbst ist zweckmäßig so ausgeführt, daß sie aus der Konsole abgenommen werden kann, um sie gegebenenfalls mit Frischwasser zu füllen.

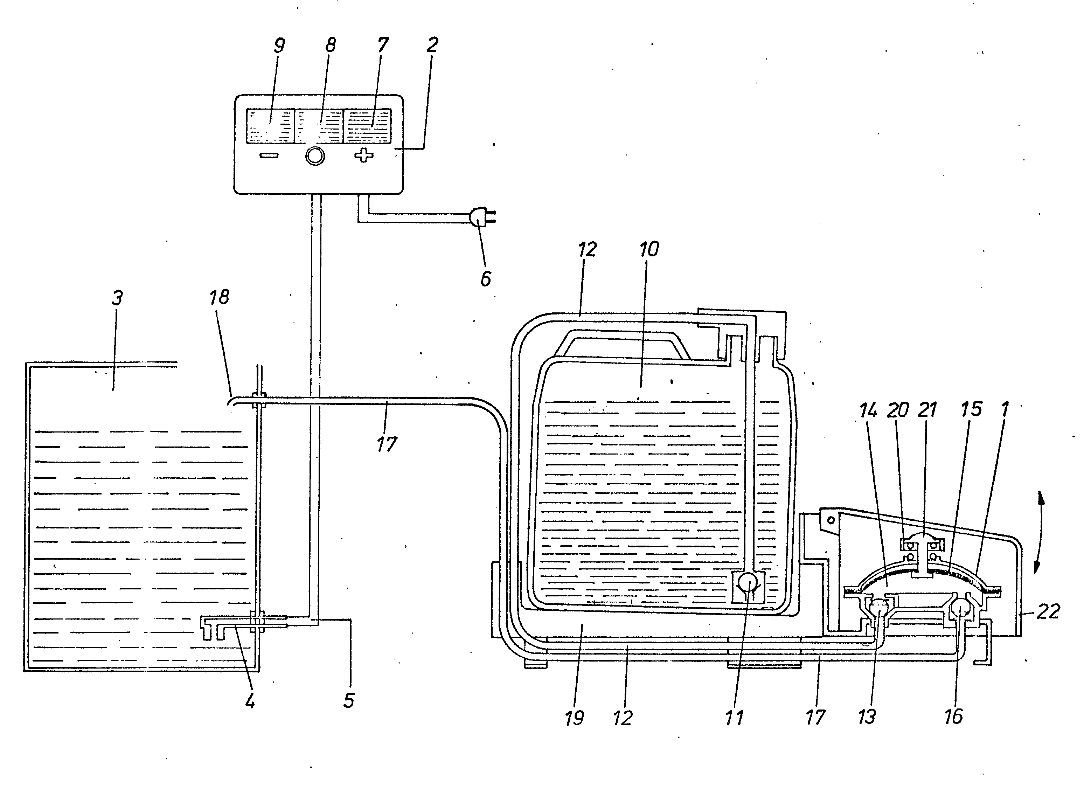

Anhand der schematischen Zeichnung eines Ausführungsbeispiels werden weitere Einzelheiten der Erfindung erläutert. Die Zeichnung stellt im wesentlichen eine Fußdosierpumpe 1 in Verbindung mit einem Leitfähigkeits- bzw. Konzentrationsanzeigegerät 2 und einer in einem gewerblichen Geschirrspülmaschinentank 3 eingeführte Elektrode 4 zur Konzentrationsüberwachung dar. Die in den Tank 3 reichende Elektrode 4 ist über eine Leitung 5 mit dem einen Stromanschluß 6 besitzenden Konzentrationsanzeigegerät 2 verbunden. Dieses besitzt drei Anzeigefelder, nämlich ein gelbes, Überdosierung anzeigendes Feld 7, ein grünes, die Soll-Konzentration anzeigendes Feld 8 und ein rotes, Unterdosierung signalisierendes Feld 9.

Das Bedienungspersonal weiß, daß bei Aufleuchten des roten Lichts im Feld 9 des Konzentrationsanzeigegeräts 2 die Fußpumpe 1 so lange zu betätigen ist, bis das grüne Licht in Feld 8 des Geräts 2 aufleuchtet. Bei Betätigung der Fußpumpe 1 wird Chemikal aus dem Vorratsbehälter 10 über ein Saugventil 11 mit Ansaugfilter, eine Saugleitung 12 und ein Saugventil 13 in den Pumpenraum 14 der Fußpumpe 1 angesaugt und von dort aus durch Betätigung der Pumpenmembrane 15 über ein Druckventil 16 der Dosierpumpe sowie der Druckleitung 17 zur Dosierstelle 18 gebracht. Die Leitungen 12 und 17 stellen also die zwischen dem Chemikalienvorratsbehälter 10 und dem Geschirrspülmaschinentank 3 befindliche Leitung dar, in die die Fußpumpe 1 eingeschaltet ist.

/4

Die Fußpumpe 1 befindet sich vorzugsweise abnehmbar auf einer Konsole 19, auf die zweckmäßig auch der Chemikalienvorratsbehälter 10 aufzusetzen ist. Die Dosiermenge pro Hub der erfindungsgemäßen Fußpumpe 1 kann zweckmäßig durch einen Begrenzungsring 20 am Betätigungsknopf 21 der Fußpumpe 1 beschränkt werden. Mit Hilfe des Begrenzungsrings 20 und durch dessen geeignete Einstellung kann die jeweils gewünschte Größe des Nachdosierhubs vorgegeben werden. Um die erfindungsgemäße Fußpumpe 1 gegen Schmutz zu schützen, ist diese zweckmäßig unter einer Kappe 22 angeordnet, auf die der jeweilige Fußdruck dann ausgeführt werden kann.

Bezugszeichenliste

|    |   |                           |
|----|---|---------------------------|
| 1  | = | Fußpumpe                  |
| 2  | = | Konzentrationsanzeigegerät |
| 3  | = | Tank                      |
| 4  | = | Elektrode                 |
| 5  | = | Leitung                   |
| 6  | = | Stromanschluß             |
| 7  | = | Überdosierung             |
| 8  | = | richtige Dosierung        |
| 9  | = | Unterdosierung            |
| 10 | = | Vorratsbehälter           |
| 11 | = | Saugventil                |
| 12 | = | Saugleitung               |
| 13 | = | Saugventil                |
| 14 | = | Pumpenraum                |
| 15 | = | Pumpenmembran             |
| 16 | = | Druckventil               |
| 17 | = | Druckleitung              |
| 18 | = | Dosierstelle              |
| 19 | = | Konsole                   |
| 20 | = | Begrenzungsring           |
| 21 | = | Betätigungsknopf          |
| 22 | = | Schutzkappe               |

"Dosierkombination"

<u>P a t e n t a n s p r ü c h e</u>

1. Dosierkombination zum Nachfüllen von Lauge oder dergleichen aus einem Chemikalienvorratsbehälter in den Tank einer gewerblichen Geschirrspülmaschine mit in den Tank eingeführter Elektrode zum Überwachen der in Einheiten der Konzentration gemessenen Leitfähigkeit der im Tank befindlichen Lösung, gekennzeichnet durch eine in eine Leitung (12, 17) zwischen den Vorratsbehälter (10) und den Tank (3) eingeschaltete, bei Unterkonzentration zu betätigende Fußpumpe (1).

2. Dosierkombination nach Anspruch 1, dadurch gekennzeichnet, daß der Vorratsbehälter (10) sich auf der Konsole (19) der Fußpumpe (1), auf der die letztere vorzugsweise abnehmbar anzuordnen ist, befindet.

3. Dosierkombination nach Anspruch 1 oder 2, dadurch gekennzeichnet, daß die Dosiermenge pro Hub der Fußpumpe (1), insbesondere mit Hilfe eines am Betätigungsknopf (21) der Pumpe (1) angeordneten Begrenzungsrings (20), zu beschränken ist.

4. Dosierkombination nach einem oder mehreren der Ansprüche 1 bis 3, gekennzeichnet durch eine die Fußpumpe (1) abdeckende Kappe (22), auf die der jeweilige Fußdruck beim Betätigen der Pumpe (1) auszuüben ist.

/6

0023688

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 525 754 (ALBRECHT) <br> * Spalte 2, Zeilen 43-47; Spalte 3, Zeilen 24-31; Figur 1 * | 1 |
| | US - A - 2 292 749 (FEINSON et al.) <br> * Figuren 1,3,7 * | 1,2,4 |
| | US - A - 2 333 763 (BOBRICK) <br> * Das ganze Dokument * | 1,2 |
| | US - A - 1 615 413 (SNYDER) <br> * Figur 2 * | 1 |
| | US - A - 2 628 744 (MOWBRAY) <br> * Figuren 1,2,4 * | 1 |
| | DE - C - 509 302 (STEINGAESSER & CO.) <br> * Das ganze Dokument * | 1 |
| | FR - A - 1 327 430 (COOKSON) <br> * Seite 3, linke Spalte; Figur 1 * | 3 |

**KLASSIFIKATION DER ANMELDUNG (Int. Cl.³)**

A 47 L 15/44
D 06 F 39/02
G 01 F 11/08

**RECHERCHIERTE SACHGEBIETE (Int. Cl.³)**

A 47 L
A 47 K
D 06 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-11-1980 | SCHARTZ |

EPA form 1503.1 06 78